# EUROPEAN PATENT APPLICATION

(11) **EP 2 610 942 A2**
(43) Date of publication of application: **03.07.2013**
(21) Application number: 12182640.8
(22) Date of filing: 31.08.2012
(51) Int. Cl.: H01M 2/10, H01M 2/04, H01M 2/02

(54) **Lithium ion battery and manufacturing method thereof**

(30) Priority: 27.12.2011 CN 201110442082
(71) Applicant: Dongguan NVT Technology Co., Ltd, Dongguan, Guangdong 523407 (CN)
(72) Inventor: Xie, Jaeger, 523407 Dongguan (CN)
(74) Representative: Decamps, Alain René François

(57) **Abstract**

The invention relates to a lithium ion battery which comprises a cell (1) and a shell (2) containing same. The front end of the cell (1) is connected with a protective plate (3) and a top cover (4), the top cover (4) and the shell (2) are connected through fasteners, and the shell (2) is a plastic shell. With respect to the conventional art, the top cover (4) and the shell (2) are connected and assembled through fasteners, few workstations are thus required to complete the assembly of the whole shell, the structure of the lithium battery is simplified, labor and time are greatly saved, and the production efficiency is improved. The shell body is light and thin, so that the maximum capacity of the battery is realized based on light weight. A method for manufacturing the lithium ion battery is also discloses.

## Description

### Technical field of the invention

The invention belongs to the technical field of lithium ion batteries, and particularly relates to a lithium ion battery with thin shell wall, simple structure and high energy density, and a manufacturing method thereof.

### Background of the invention

As one kind of clear energy, due to their advantages such as high voltage, long charge/discharge service life, less environmental pollution and low self-discharge rate, lithium ion batteries have been widely applied in all kinds of electronic products, for example, smart phones, laptop computers, digital cameras and portable small appliances and the like.

With the increasing demands on the miniaturization of electronic products, lithium ion batteries are also correspondingly required to be thin, with high energy density.

At present, the packaging structure of lithium ion batteries generally comprises a front cover, a rear cover, a shell and a protective plate and the like, the front cover and the rear cover are generally connected by adhesive bonding or welding. The shell is generally metallic, and the shell is generally connected with the front cover and the rear cover by adhesive bonding or welding or integrally molded by injection. Sealants are filled in gaps between the cell and the shell, between the front cover and the cell, and between the rear cover and the cell, to make the cell not shake. The front cover and the rear cover have to be injected to form a frame with a certain thickness in order to guarantee the strength, as a result, the wasted space is large, the energy density cannot be increased, and the requirement of thin lithium ion batteries cannot be met; besides, the assembly process is complicated, which is not conducive to improve the production efficiency and reduce the production cost.

Therefore, it is necessary to provide a lithium ion battery with thin shell wall, simple structure and high energy density, and a manufacturing method thereof.

### Summary of the invention

One purpose of the invention is to provide a lithium ion battery with thin shell wall, simple structure and high energy density in allusion to defects in the conventional art.

In order to achieve the above purpose, the following technical solution is adopted in the disclosure:

a lithium ion battery comprises a cell and a shell for containing the cell, the front end of the cell is connected with a protective plate and a top cover, the top cover and the shell are connected through fasteners, and the shell is a plastic shell. The plastic shell is not only light, but also insulating, so that it is unnecessary to coat a layer of insulating paper outside the shell, which is conducive to decrease the volume of the cell and increase the energy density.

As one improvement of the lithium ion battery in the disclosure, the shell comprises a shell main body and a bottom shell, which are integrally molded.

As one improvement of the lithium ion battery in the disclosure, a label is stuck outside the shell main body.

As one improvement of the lithium ion battery in the disclosure, bumps are arranged on the outer surface of the top cover, and holes matched with the bumps are arranged in the open area of the shell main body, in this way, the top cover and the shell can be connected by fasteners.

As one improvement of the lithium ion battery in the disclosure, insulating paper is arranged between the cell and the protective plate, for the purpose of insulating.

As one improvement of the lithium ion battery in the disclosure, the plastic shell is made of polrvinyl chloride, polyurethane or polyethylene terephthalate. The plastic shell made of these materials not only is light, but also has certain hardness, so it is able to resist against impact from external pressure and protect the battery.

As one improvement of the lithium ion battery in the disclosure, the thickness of the plastic shell is less than or equal to 0.3mm, so that the maximum capacity of the battery is realized based on light weight.

As one improvement of the lithium ion battery in the disclosure, the cell and the protective plate are connected by spot-welding.

With respect to the conventional art, the disclosure at least has the following advantages:

first, in the disclosure, an integral design of the shell main body and the bottom shell is adopted, so that the appearance of the product is compact and firm, the volume of the shell can be determined completely according to the volume of the cell, no gap appears between the shell and the cell, so no adhesive has to be filled in the gap, the volume of the lithium battery is further decreased, and the energy density of the lithium battery is increased;

second, the top cover and the shell are connected and assembled through fasteners, just a few of workstations are required to complete the assembly of the whole shell, the structure of the lithium battery is simplified, labor and time are greatly saved, and the production efficiency is improved;

third, the thickness of the shell is less than or equal to 0.3mm and a plastic shell is adopted, the weight is light, so that the maximum capacity of the battery is realized based on light weight.

The other purpose of the disclosure is to provide a method for manufacturing the lithium ion battery, comprising the following steps:

a first step of mounting the insulating paper at the front end of the cell, then spot-welding the prepared cell on the protective plate, placing the protective plate into the top cover with bumps on the outer surface;

a second step of inserting the bumps on the outer surface of the top cover into the holes matched with the bumps in the open area of the shell main body, and then connecting and assembling by fasteners to form a lithium ion battery;

a third step of sticking a label on the shell main body.

With respect to the conventional art, the method for manufacturing the lithium ion battery is simple in process, quick in assembly and high in efficiency; and the obtained batteries are firm and light, with small volume and high energy density.

### Brief description of the drawings

Fig. 1 shows an exploded view of the invention; and

Fig. 2 shows a solid diagram of the invention.

### Detailed description of the invention

The invention will be further described in details below with reference to embodiments and drawings, however, the embodiments of the disclosure are not limited hereto.

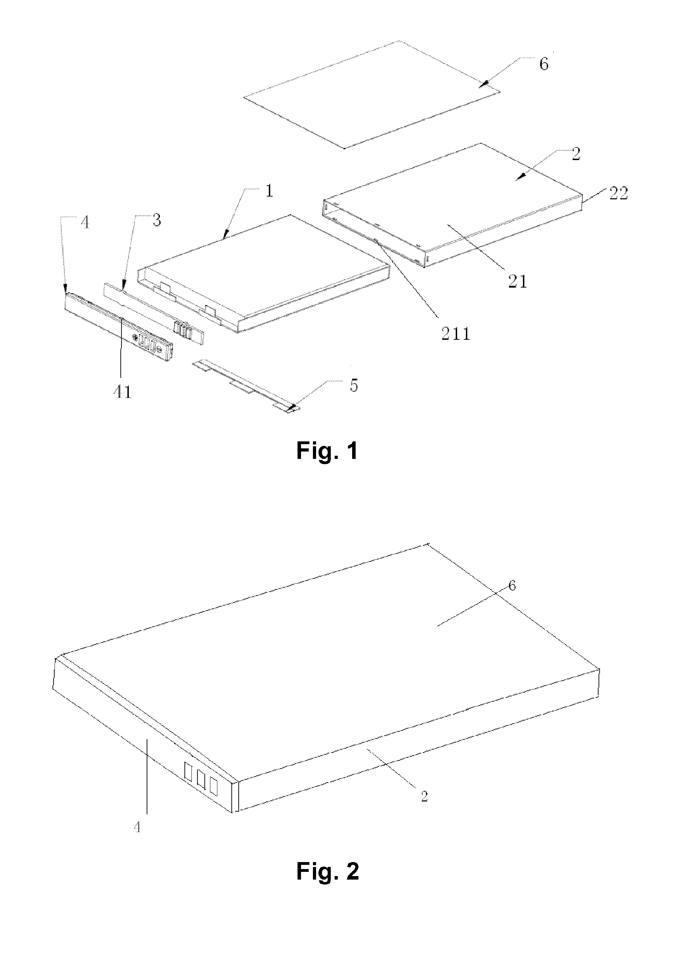

As shown in Fig. 1 and Fig. 2, the lithium ion battery in the disclosure comprises a cell 1 and a shell 2 for containing the cell 1, and a label 6 is stuck outside the insulating paper 5; the front end of the cell 1 is connected with a protective plate 3 and a top cover 4, and the cell 1 and the protective plate 3 are connected by spot-welding. The top cover 4 and the shell 2 are connected through fasteners, specifically, bumps 41 are arranged on the outer surface of the top cover 4, and holes 211 matched with the bumps 41 are arranged in the open area of the shell main body 21, in this way, the top cover and the shell can be connected by fasteners. Wherein, the thickness of the shell 2 is less than or equal to 0.3mm, the shell 2 comprises a shell main body 21 and a bottom shell 22, which are integrally molded, and the shell is made of a plastic material that is polrvinyl chloride, polyurethane or polyethylene terephthalate. The plastic shell made of these materials not only is light, but also has certain hardness, so it is able to resist against impact from external pressure and protect the battery. The label 6 is stuck outside the shell main body 21. Insulating paper 5 is arranged between the cell 1 and the protective plate 3, for the purpose of insulating.

Wherein, the front end of the cell 1 is provided with an anode tab 11 and a cathode tab 12. The anode tab 11 and the cathode tab 12 are respectively connected with the protective plate 3 by spot-welding.

During assembling, the following steps are included:

first step: the insulating paper 5 at the front end of the cell 1, the prepared cell 1 is spot-welded on the protective plate 3, and the protective plate 3 is placed into the top cover 4 with bumps 41 on the outer surface;

second step: the bumps 41 on the outer surface of the top cover 4 are inserted into the holes 211 matched with the bumps 41 in the open area of the shell main body 21, and then connected and assembled by fasteners to form a lithium ion battery;

third step: a label is stuck on the shell main body 21, and the assembling ends.

According to the disclosure and instruction of the description, technicians in the field may have variations and modifications for the above embodiment. Therefore, the disclosure is not limited to the specific embodiment disclosed and described above, any modifications and variations of the disclosure should also be included within the protection scope defined in the claims of the disclosure. In addition, although some specific items are used in the description, these items are just provided for explaining and form no limit to the disclosure.

## Claims

1. A lithium ion battery, comprising a cell (1) and a shell (2) for containing the cell (1); the front end of the cell (1) connected with a protective plate (3) and a top cover(4), **characterized in that** the top cover (4) and the shell (2) are connected through fasteners, and the shell (2) is a plastic shell.

2. The lithium ion battery according to claim 1, **characterized in that** the shell (2) comprises a shell main body (21) and a shell bottom (22), which are integrally molded.

3. The lithium ion battery according to claim 2, **characterized in that** a label (6) is stuck outside the shell main body (21).

4. The lithium ion battery according to claim 3, **characterized in that** bumps (41) are arranged on the outer surface of the top cover (4), and holes (211) matched with the bumps (41) are arranged in the open area of the shell main body (21).

5. The lithium ion battery according to claim 4, **characterized in that** insulating paper (5) is arranged between the cell (1) and the protective plate (3).

6. The lithium ion battery according to any one of claims 1 to 5, **characterized in that** the plastic shell (2) is made of polyvinyl chloride, polyurethane or polyethylene terephthalate.

7. The lithium ion battery according to any one of claims 1 to 6, **characterized in that** the thickness of the plastic shell (2) is less than or equal to 0.3mm.

8. The lithium ion battery according to any one of claims 1 to 7, **characterized in that** the cell (1) and the protective plate (3) are connected by spot-welding.

9. A method for manufacturing a lithium ion battery according to any one of claims 1 to 8, comprising the following steps:
a first step of mounting the insulating paper (5) at the front end of the cell (1), then spot-welding the prepared cell (1) on the protective plate (3), placing the protective plate (3) into the top cover (4) with bumps (41) on the outer surface;
a second step of inserting the bumps (41) on the outer surface of the top cover (4) into the holes (211) matched with the bumps (41) in the open area of the shell main body (21), and then connecting and assembling by fasteners to form a lithium ion battery;
a third step of sticking a label (6) on the shell main body (21).
